(19) Europäisches Patentamt
European Patent Office
Office européen des brevets

(11) Publication number: **0 049 845**
**A1**

(12) # EUROPEAN PATENT APPLICATION

(21) Application number: **81107944.1**

(22) Date of filing: **05.10.81**

(51) Int. Cl.[3]: **B 23 K 33/00**
**B 62 D 27/02**

(30) Priority: **09.10.80 JP 143300/80**

(43) Date of publication of application:
**21.04.82 Bulletin 82/16**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken(JP)**

(72) Inventor: **Tanak, Seiji**
**3-1-5-308, Nishikaigan, Tsujido**
**Fujisawa-shi Kanagawa-ken(JP)**

(74) Representative: **Ter Meer-Müller-Steinmeister**
**Patentanwälte**
**Triftstrasse 4**
**D-8000 München 22(DE)**

(54) **Lap joint panel structure.**

(57) A lap joint panel structure for use in a body structure of an automotive vehicle, a furniture or the like comprises at least two panels consisting of a first panel (21) having an outer surface and a seam portion (21b) cranked inwardly of the outer surface, and a second panel (22) having a seam portion (22b) integrally fastened in surface-to-surface relationship to the seam portion (21b) of the first panel (21) and an outer surface substantially coplanar with the outer surface of the first panel (21). The second panel (22) further has an edge portion (22c) deformed or curved inwardly of the outer surface of the seam portion (22b) thereof. The seam portion (21b) of the first panel (21) is formed with a groove (23) extending along the edge portion (22c) of the second panel (22) so as to receive the edge portion (22c) of the second panel (22) therein.

FIG. 4A

21
21c
23
21b
22
21a
24
22b
22a
22c

EP 0 049 845 A1

DESCRIPTION

The present invention relates to a lap joint panel structure for use in a body structure of an automotive vehicle, a furniture or the like and, more particularly, to a joggled lap joint panel structure which comprises at least two panels consisting of first and second panels integrally fastened in surface-to-surface relationship to each other.

In accordance with the present invention, there is provided a lap joint panel structure which comprises at least two panels consisting of a first panel having an outer surface and a seam portion cranked inwardly of the outer surface, and a second panel having a seam portion integrally fastened in surface-to-surface relationship to the seam portion of the first panel and an outer surface substantially coplanar with the outer surface of the first panel, wherein the second panel further has an edge portion deformed or curved inwardly of the outer surface of the seam portion thereof, and wherein the seam portion of the first panel is formed with a groove extending along the edge portion of the second panel so as to receive the edge portion of the second panel therein.

Drawbacks of a prior-art lap joint panel structure and detailed features and advantages of a lap joint panel structure according to the present invention will be understood from the following description taken in conjunction with the accompanying drawings in which:

Fig. 1 is a perspective view of a vehicle body structure of an automotive vehicle and shows lap joint panel structures which are applied thereto;

Fig. 2 is an enlarged fragmentary perspective view as seen from the rear end of the vehicle body structure of the vehicle and shows lap joint panel structures which are also applied thereto;

Figs. 3A and 3B are cross sectional views of a prior-art lap joint panel structure of the nature to which the present invention appertains;

Figs. 4A and 4B are cross sectional views showing one embodiment of a lap joint panel structure according to the present invention; and

Figs. 5A and 5B are cross sectional views showing another embodiment of the lap joint panel structure according to the present invention.

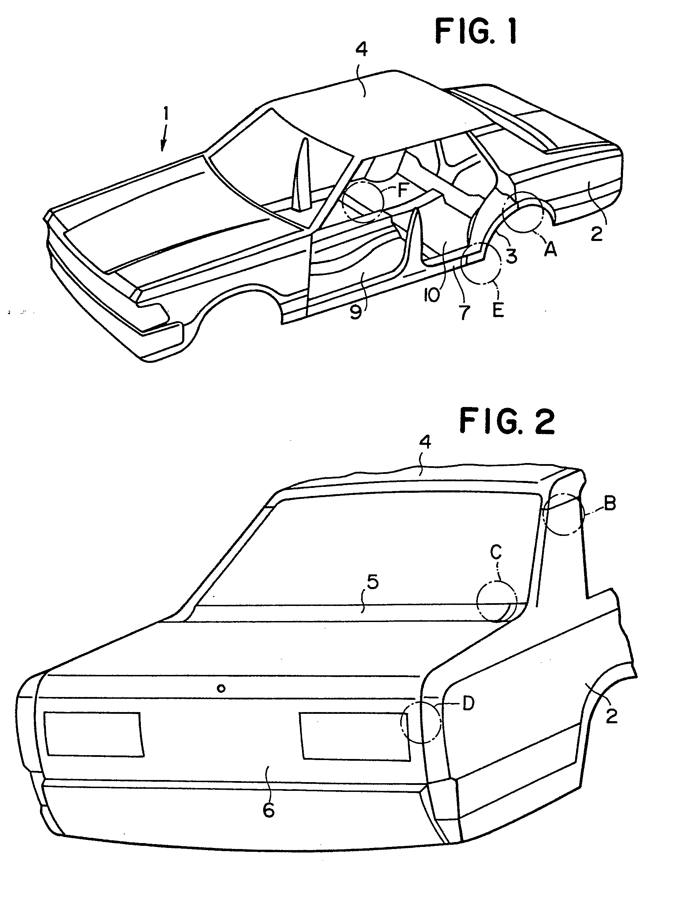

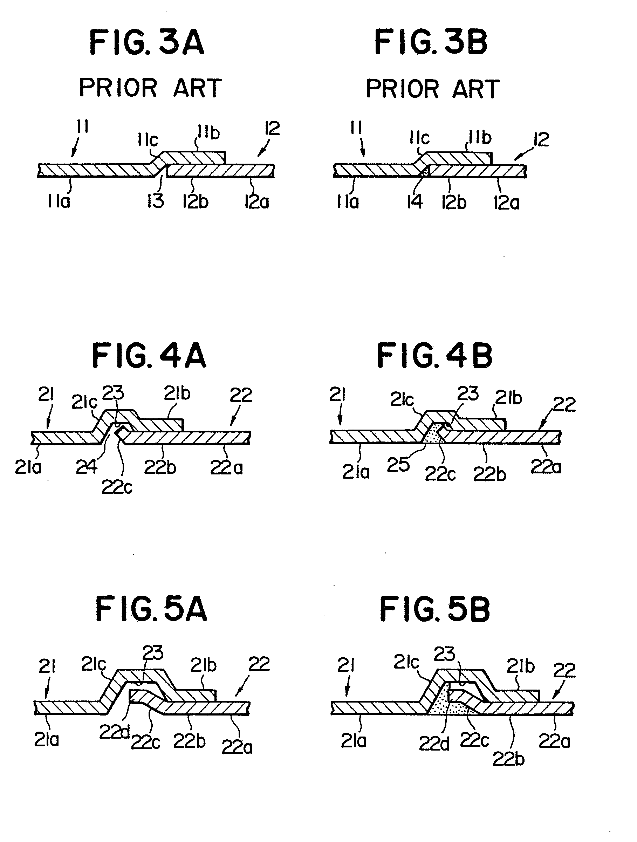

A vehicle body structure of an automotive vehicle has a number of panels which are in general spot welded or otherwise integrally fastened to each other for defining a passenger compartment. In Figs. 1 and 2 of the drawings is shown a representative example of such an incomplete vehicle body structure 1 which is formed by a number of panels having seam portions welded to one another. To the seam portions of the panels such as a rear fender panel 2 and a rear wheel house outer panel 3, a roof panel 4 and the rear fender panel 2, a rear waist panel 5 and the rear fender panel 2, a rear panel 6 and the rear fender panel 2, a sill outer panel 7 and the rear wheel house outer panel 3, and a front floor panel 9 and a rear floor panel 10 are applied lap joint panel structures which are enclosed with circles A to F, respectively. One of the lap joint panel structures as shown in the circles A to F of Figs. 1 and 2 is illustrated in Figs. 3A and 3B to an enlarged scale. In Figs. 3A and 3B of the drawings, the lap joint panel structure is shown as comprising two panels consisting of a first panel 11 and a second panel 12. The first panel 11 has a panel body portion 11a, a seam portion 11b spaced apart inwardly from and in parallel to the panel body portion 11a, and a cranked portion 11c having both lateral ends integral with the panel body portion 11a and the seam portion 11b. The second panel 12 has a panel body portion 12a, and a seam portion 12b integral with the panel body portion 12a and welded, soldered, brazed, bonded or otherwise integrally fastened in surface-to-surface relationship to the seam portion 11b of the first panel 11 in such a manner that the outer surface of the panel body portion 11a of the first panel 11 is substantially in coplanar relationship to the outer surface of the panel body portion 12a of the second panel 12. The seam portion 12b of the second panel 12 has an edge portion which is laterally spaced apart from the cranked portion 11c of the first panel 11 for forming therebetween an interstice 13. A filler 14 such as a putty, a sealer, a solder, a brazing solder or the like is received in the interstice 13 and has an outer surface substantially flush with the extensions of the outer surfaces of the first and second panels 11 and 12.

A conventional lap joint panel structure of the nature hereinbefore described has drawbacks one of which is that a clumsy external appearance tends to be caused on the outer surface of the second panel 12 at its seam portion 12b since the edge portion of the seam portion 12b of the second panel 12 is frequently caused to protrude over the surfaces of the panel body portions 11a and 12a of the first and second panel 11 and 12 and thus the seam portion 12b of the second panel 12 is not reduced to be coplanar at its outer surface with the panel body portions 11a and 12a of the first and second panels 11 and 12. One of the reasons is such that the seam portion 12b of the second panel 12 is curved or deformed during the spot welding process of the lap joint panel structure since pressure is applied to the seam portions 11b and 12b of the first and second panels 11 and 12 by electrodes through which electric current passes. The other of the reasons is such that the measurement of the cranked portion 11c is smaller than the thickness of the panel body portion 12a of the second panel 12 if the cranked portion 11c is not accurately fabricated in a shaping operation. The protruded edge portion of the seam portion 12b of the second panel 12 is difficult to be coated with a paint, and thus is readily corroded.

The present invention contemplates provision of a lap joint panel structure which is free from these drawbacks inherent in a prior-art lap joint panel structure of the described character.

A first embodiment of a lap joint panel structure according to the present invention will be hereinafter described with reference to Figs. 4A and 4B of the drawings.

In Figs. 4A and 4B, a joggled lap joint panel structure embodying the present invention is shown as comprising two panels consisting of a first panel 21 and a second panel 22. The first panel 21 has a panel body portion 21a, a seam portion 21b spaced apart inwardly from and partially in parallel to the panel body portion 21a, and a cranked portion 21c having both lateral ends integral with the panel body portion 21a and the seam portion 21b. The seam portion 21b is thus cranked or curved inwardly of the outer surface of the panel body portion 21a. The second panel 22 has a panel body portion 22a, and a seam portion 22b integral with the panel body portion 22a and welded, soldered, brazed, bonded or otherwise integrally fastened in surface-to-surface relationship to the seam portion 21b of the first panel 21 in such a manner that the outer surface of the panel body portion 21a of the first panel 21 is substantially in coplanar relationship to the outer surface of the panel body portion 22a of the second panel 22. The second panel 22 further has an edge portion 22c deforemd or curved inwardly of the outer surface of the seam portion 22b.

The seam portion 21*b* of the first panel 21 is formed with a groove 23 extending along the edge portion 22*c* of the second panel 22 and receiving the edge portion 22*c* of the second panel 22. The groove 23 has a depth sufficiently deep to receive the deformed edge portion 22*c* of the second panel 22. The cross section of the groove 23 may be formed in a V-shape, U-shape or the like and is not limited to these configurations. The edge portion 22*c* of the second panel 22 is laterally spaced apart from the cranked portion 21*c* of the first panel 21 for forming an interstice 24 therebetween. A filler 25 such as a putty, a sealer, a solder, a brazing solder or the like is received in the interstice 24 and has an outer surface substantially flush with the extensions of the outer surfaces of the panel body portions 21*a* and 22*a* of the first and second panels 21 and 22.

The step of fabricating such a joggled lap joint panel structure as described above comprises preparing the first and second panels 21 and 22 thus constructed, welding the seam portions 21*a* and 22*a* of the first and second panels 21 and 22 with the edge portion 22*c* being received in the groove 23, filling in the groove 23 a sufficient amount of the filler 25 to protuberate over the outer surfaces of the panel body portions 21*a* and 22*a* of the first and second panels 21 and 22, and brushing out or cut away the protuberated filler 25 until the filler 25 becomes substantially coplanar with the outer surfaces of the panel body portions 21*a* and 22*a* of the first and second panels 21 and 22. The lap joint panel structure is then coated with a paint in an ordinary painting process.

A second embodiment of a joggled lap joint panel structure according to the present invention is shown in Figs. 5A and 5B in which the second panel 22 is formed with an extension 22d extending toward the cranked portion 21c of the first panel 21 from the edge portion 22c of the second panel 22 and substantially in parallel to the seam portion 21b of the first panel 21. The groove 23 of the second embodiment of the lap joint panel structure is shown to have a width wider than that of the groove 23 in the first embodiment of the lap joint structure previously mentioned so as to enable the extension 22d to be received in the groove 23. The other construction of the second embodiment of the lap joint structure is substantially identical to that of the first embodiment of the lap joint structure and will therefore be not described hereinlater.

While it has been described in the above that the lap joint structures are applied to those of the body structure of the automotive vehicle enclosed with the circles A to F, such lap joint structures are not limited to the above structures and may be of course applied to other lap joint structures such as, for example, a structure of a wheel house outer panel and a rear fender panel welded to each other and seen directly from the exterior of the vehicle body and other structures which can be seen when a food and a trunk lid of the vehicle body are opened. The lap joint panel structure according to the present invention may be applied to furnitures, airplanes and the like.

From the foregoing description, it will have been appreciated that the lap joint panel structure according to the present invention is characterized primarily in that the the edge portion 22c of the seam portion 22b of the second panel 22 is not caused to protrude over the surfaces of the panel body portions 21a and 22a of the first and second panels 21 and 22 and the seam portion 22b of the second panel 22 is thus at all times reduced to be coplanar at its outer surface with the panel body portions 21a and 22a of the first and second panels 21 and 22 by the reason that the seam portion 22b of the second panel 22 has an edge portion 22c deformed to be received in the groove 23. It is therefore understood that the lap joint panel structure according to the present invention can take up deviation of the accuracy of the panels and can be provided with smooth and continuous surfaces thereon. The edges of the panels can be thus completely and excellently painted and thus are not corroded. As a consequence, an excellent external appearance will be provided to the lap joint panel structure of this nature hereinbfore described. In addition, the seam portion 22b of the second panel 22 can be enhanced in rigidity.

CLAIMS

1. A lap joint panel structure comprising at least two panels consisting of

a first panel having an outer surface and a seam portion cranked inwardly of the outer surface, and

a second panel having a seam portion integrally fastened in surface-to-surface relationship to said seam portion of said first panel and an outer surface substantially coplanar with the outer surface of said first panel,

c h a r a c t e r i z e d in that

said second panel (22) has an edge porition (22c) deformed inwardly of the outer surface of said seam portion (22b) thereof, and that said seam porition (21b) of said first panel (21) is formed with a groove (23) extending along the edge portion (22c) of said second panel (22) so as to receive said edge portion (22c) of said second panel (22).

2. A lap joint panel structure as set forth in claim 1,

c h a r a c t e r i z e d in that

said groove (23) receives therein a filler (25) having an outer surface substantially coplanar with the outer surfaces of said first and second panels (21,22).

3. A lap joint panel structure as set forth in claim 1 or 2,

c h a r a c t e r i z e d in that

said second panel (22) is formed with an extension extending from said edge portion (22c) of said seam portion (22b) of said second panel (22) and substantially in parallel to said seam portion (21b) of said first panel (21).

FIG. 1
4
1
F
A
2
3
10
7
E
9

FIG. 2
4
B
C
5
D
2
6

FIG. 3A

PRIOR ART

11
11c
11b
12
11a
13
12b
12a

FIG. 3B

PRIOR ART

11
11c
11b
12
11a
14
12b
12a

FIG. 4A

21
21c
23
21b
22
21a
24
22b
22a
22c

FIG. 4B

21
21c
23
21b
22
21a
25
22c
22b
22a

FIG. 5A

21
21c
23
21b
22
21a
22d
22c
22b
22a

FIG. 5B

21
21c
23
21b
22
21a
22d
22c
22b
22a

0049845

European Patent Office

# EUROPEAN SEARCH REPORT

Application number

EP 81107944.1

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | US - A - 3 465 420 (WEBB et al.) + Fig.4 + | 1,2,3 | B 23 K 33/00<br>B 62 D 27/02 |
| | -- -- -- | | TECHNICAL FIELDS SEARCHED (Int.Cl. 3) |
| | | | B 23 K 31/00<br>B 23 K 33/00<br>B 62 D 25/00<br>B 62 D 27/00 |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| VIENNA | 18-12-1981 | SCHMICKL |